# EUROPEAN PATENT SPECIFICATION

(11) **EP 0 307 586 B1**
(45) Date of publication and mention of the grant of the patent: **20.01.1993**
(21) Application number: 88111887.1
(22) Date of filing: 27.10.1982
(51) Int. Cl.: G11B 5/588, G11B 21/10, G11B 20/18, G11B 21/08

(54) **An improved automatic head position tracking servo for a rotary head magnetic tape recording and reproducing apparatus**
Automatisches Positionierungssystem für den rotierenden Tonkopf in einem Magnetbandgerät für Aufnahme und Wiedergabe
Dispositif d'asservissement pour le suivi automatique de la position de la tête pour un dispositif d'enregistrement et de reproduction sur bande magnétique à tête rotative

(30) Priority: 17.09.1982 WO PCT/US82/01283
(43) Date of publication of application: 22.03.1989
(62) Divisional of application: 82903617.7
(73) Proprietor: AMPEX CORPORATION, Redwood City California 94063-3199 (US)
(72) Inventor: Ravizza, Raymond R., Cupertino California 95015 (US)
(74) Representative: Horton, Andrew Robert Grant

(56) References cited:
- EP-A- 0 051 428
- GB-A- 2 096 801

## Description

The present invention generally relates to magnetic tape recording and reproducing apparatus, and more particularly, to an improved automatic head position tracking servo system for use in such apparatus.

One of the most significant improvements in rotary head magnetic tape recording and reproducing apparatus has been automatic head position tracking servo systems. In one class of rotary head tape recording ad reproducing apparatus having such servos, the tape is driven by a capstan to be transported along a helical path extending around substantially the full circumference of a tape guide drum while it is scanned by a rotating magnetic head. In such apparatus designed to record and reproduce television signals, the record and/or reproduce head rotates generally at the television signal field rate, regardless of the type of television signal format. The head rotates at 50 Hertz (Hz) in apparatus designed for 50 Hz line standard formats and 60 Hz in apparatus designed for the 60 Hz line standard formats. Typically, one of two axially displaced tape guide drums rotates and carries the rotating record and/or reproduce head for scanning the tape during recording and reproducing operations.

Apparatus provided with an automatic head position tracking servo system generally has a video reproduce head mounted at the end of a movable structure, often a piezoceramic bimorph element or the like, which is controlled to move the head selectively in a direction transverse relative to the longitudinal direction of the recorded tracks. It should be appreciated that in many rotary head tape recording and reproducing apparatus employing helical tape transports, a full television field of video information is recorded on each of a series of separate parallel tracks, which are oriented at a severe acute angle relative to the length direction of the tape. The capability of moving the head transversely relative to the tracks enables a servo control system to control the position of the head so that it will accurately follow a track during reproducing operations, even at velocities of tape transport deviating from the normal record and/or reproduce velocity. At the end of each scan of a track, the servo control system positions the head to begin following the next desired track, either by allowing the head to follow the next adjacent track of the series of tracks or by rapidly moving or resetting the head transversely to the longitudinal direction of the tracks to position it on a track other than such adjacent track. In some tape velocity operating modes, the head is reset to follow the track whose scan was just completed and in other tape velocity operating modes the head is reset to follow a different track. The next desired track to be followed is determined by the speed and direction, i.e., the velocity of the transport of the tape. The capability of accurately following the track during reproducing operations and resetting the head at the end of the reproduction of a track enables superior quality reproducing of video information for creating special motion effects, such as the still field or frame stop motion, variable slow motion, fast motion or reverse motion effects, as well as asynchronous reproduction wherein the tape is transported at a speed that approximates normal speed, but which is slightly at variance relative thereto. Asynchronous reproduction modes are employed to slightly compress or expand the length of a program to facilitate fitting a desired length of program within a specified time interval without noticeable alteration of the program material. Altering the speed of tape transport enables this to be achieved because the reproduce time of a given interval of recorded video information is altered in a corresponding manner.

Common automatic head position tracking servo systems introduce a slight oscillatory or dithering motion to the movable element to cause it to move the head purposefully off track and, thereby, effect the generation of a track position error signal. This error signal is used to generate an error correcting signal to maintain the head accurately centered, i.e., registered on the track. Prior art systems e.g. as shown in GB-A-1579854 have also included level detectors for detecting the magnitude of the error correcting signal applied to the movable element and responsively initiating the generation of reset or repositioning signals for application to the movable element for the purpose of positioning the supported head to follow a new or the same track when such is required during the reproduction of special motion effects.

During the field stop motion special effect, where a particular recorded track of video information is being repetitively reproduced so as to provide a still image when displayed on a video monitor, the transport of the tape is stopped and the automatic head position tracking servo repositions the head at the end of each reproduction of the track to repeat the reproduction of video information from the track. In so doing, the head must only move a distance that corresponds to the distance between the centers of adjacent tracks. However, for certain other special motion effects, such as reverse slow motion or faster than 2x normal motion, the tape is transported at a velocity other than the normal reproducing velocity and it is necessary to reset the head by a distance equal to two or more center-to-center track spacings. Present automatic head position tracking systems function to effect such head position control while the tape is transported at a fixed velocity different from the normal record/reproduce tape transport velocity and during intervals when the tape transport velocity is changed. During both of these tape transport operating conditions, the tracking system effects a head reset according to the tape transport velocity and the position of the movable head at the end of each scan of the tape by the movable head. Each time the movable head is reset, it results in a change in the sequence of reproduced tracks of information relative to a stable reference and loss of the established synchronous reproduction operating condition. In helical tape transport recording and reproducing apparatus, for example, synchronous reproduction of recorded television signals requires reproduction of consecutive fields of the television signal in a sequence determined by a repeating field sequence defined by a stable reference. Consequently, a movable head reset occurring during a tape transport velocity change interval can introduce a visually perceptible disturbance in the reproduced television signal as a result of the interruption of the reproduced field sequence. As will be appreciated, avoidance of such disturbances is very desirable, particularly, in the production of commercial television programs for broadcast to the public.

From the foregoing, it will be appreciated that there is a need for improved operating capability for automatic head position tracking systems.

In an automatic head position tracking servo system of the foregoing type wherein the position of the transducing means is deflected to effect the correction of periodically occurring, i.e, dynamic, head tracking errors during the scan of a track by a head supported by the movable element, including high frequency repetitive dynamic head tracking errors, deleterious effects are produced by spurious signals generated during certain special motion effects and the main object of the invention is to counter these effects.

It is known from EP-A-0051428 to provide a helical wrap magnetic video tape recording and reproducing machine, comprising transducing means operatively supported by rotation means for scanning a magnetic tape along a plurality of adjacent discrete tracks oriented at an angle relative to the lengthwise direction of the tape, wherein each track contains a field of video information, the rotation means including means for moving said transducing means generally transversely relative to the longitudinal direction of said tracks in response to signals being applied thereto, servo control means for controlling the transverse position of the transducing means to cause the transducing means to follow a track during reproducing and to selectively reposition the transducing means to begin following a next desired track to be reproduced when the machine is operating in a reproducing mode wherein transverse repositioning of the transducing means is selectively required, and a dynamic error-correction means which applies a correction signal to the servo control means to compensate for high frequency repetitive errors that are present during the following of tracks, the dynamic error-correction means being arranged to sample the dynamic error at a predetermined number of sample locations during the following of each track and to store continually updated average values of the samples taken at each sample location over a series of tracks. The present invention is characterised relative thereto by means for inhibiting the updating of the said average value for each sample location at a preselected reproducing speed at which transverse repositioning of the transducing means occurs for alternate tracks.

Preferably the machine comprises a plurality of capacitors for storing the sample values and the said means for selectively inhibiting includes means for preventing the application of new sample values to the capacitors.

The dynamic correction means may include a switch which is operable to apply the value of a tracking error signal present on an input line to any one of the plurality of capacitors that is conditioned to accept the value, said means for inhibiting providing a signal for opening the switch to prevent the application of the value of the tracking error signal to any of the capacitors.

The preselected speed may be half a normal speed of reproduction.

In the accompanying drawings:
FIG. 1(a) is a functional block diagram of the automatic head position tracking servo system embodying the present invention;
FIG. 1(b) is a functional block diagram of the capstan servo system operatively associated with the automatic head position tracking servo system embodying the present invention;
FIGS. 2(a) through 2(k) illustrate timing relationships that exist during operation of the servo system shown in the block diagram of FIG. 1(a);
FIG. 3 is a diagram illustrating the reproduced active video RF envelope near the drop-out interval that occurs between successive scans of the tape in a rotary head tape recording and reproducing apparatus having a single video head reproducing the video information and particularly illustrating the relation of the drop-out interval to a position reset operation of the movable element and supported video head;
FIGS. 4(a), 4(b) and 4(c) are diagrams of the displacement or movement waveforms of the movable element and supported head for single field stop motion and one-half slow motion and rapid tape transport velocity change reproducing operations, respectively;
FIG. 5 is a graph illustrating the decision levels for determining transverse repositioning of the movable head during normal reproducing operations;
FIG. 6 is a graph illustrating the decision levels for determining transverse repositioning of the movable head during single field stop motion reproducing operations;
FIG. 7 is a graph illustrating the decision levels for determining transverse repositioning of the moveable head during frame reset only special effects reproducing operations;
FIG. 8 is a graph illustrating the decision levels for determining transverse repositioning of the moveable head during variable slow motion reproducing operations;
FIG. 9 is a graph illustrating the transfer function of drive voltage versus deflection of a piezo-ceramic bimorph movable element, with the dotted line representation illustrating the compensation that is applied thereto to linearize the transfer function throughout its range of deflection;
FIGS. 10(a) and 10(b) together illustrate a detailed electrical schematic diagram of circuitry which can be used to carry out the block diagram of FIG. 1, and particularly illustrating the synchronous detectors, the tone generator and the mode control circuitry thereof;
FIGS. 11(a) and 11(b) together illustrate a detailed electrical schematic diagram of circuitry which can be used to carry out the block diagram of FIG. 1; and particularly illustrating the dynamic correction circuitry and the dynamic correction inhibiting circuitry; and,
FIGS. 12(a) , 12(b) , 12(c) and 12(d) together illustrate a detailed electrical schematic diagram of circuitry which can be used to carry out the block diagram of FIG. 1, and particularly illustrating the timer circuitry, the tape velocity detector circuitry, the tachometer scaling and synchronizing circuitry, the head deflecting signal reset circuitry, the wrong field detection circuitry, the multiplexer circuitry and the head deflection accumulator circuitry.

### Detailed Description

Broadly stated, the present invention relates to a helical wrap video tape recording and reproducing apparatus of the type which has a tape guide drum with a head carrying rotating portion, commonly referred to as a scanner, around which the tape is helically transported and which has a movable element to which a transducing head is attached. The automatic head position tracking servo of the present invention generates the signals that are applied to the movable element for positioning the same to cause the attached head to accurately follow a track during reproducing and to selectively reposition or reset the head incrementally to begin following a subsequent track to be reproduced. The subsequent track to be reproduced may be the adjacent track of recorded information or it may be a different track of recorded information, depending upon the mode of operation of the apparatus and the velocity with which the tape is being transported around the tape guide drum during such reproduction. The movable element is meant in the broad sense to include any structure that is capable of moving an attached transducing head mounted thereon laterally relative to the longitudinal direction of the tracks of information recorded along the tape in response to applied drive signals. However, a preferred embodiment of the present invention contemplates a piezo-ceramic bimorph assembly that is supported at one end, with the transducing head mounted at the opposite end such that by applying a voltage to the bimorph assembly, the opposite end deflects and thereby moves the transducing head transversely relative to the longitudinal direction of the recorded tracks of information.

The voltage that is applied to the bimorph assembly causes the assembly to move and a detection means operatively associated with the assembly provides a feedback signal that is indicative the tracking position of the head. However, the characteristics of the bimorph assembly are generally known so that the signal that is applied to it is also indicative of the change in deflected position thereof. As with prior art automatic head position tracking servo systems, a dither generating means, is employed for causing the bimorph element to produce an oscillatory movement transversely relative to the longitudinal direction of the recorded tracks so as to provide a slight periodic variation in the amplitude of the envelope of the detected RF video signal being reproduced. This envelope variation is used to generate a feedback track error correcting signal that is applied to the movable element for the purpose of adjusting its position to maintain the head on a recorded track during the reproducing operation. There are many desirable features of the automatic head position tracking servo system that will be hereinafter fully explained during the course of the detailed description.

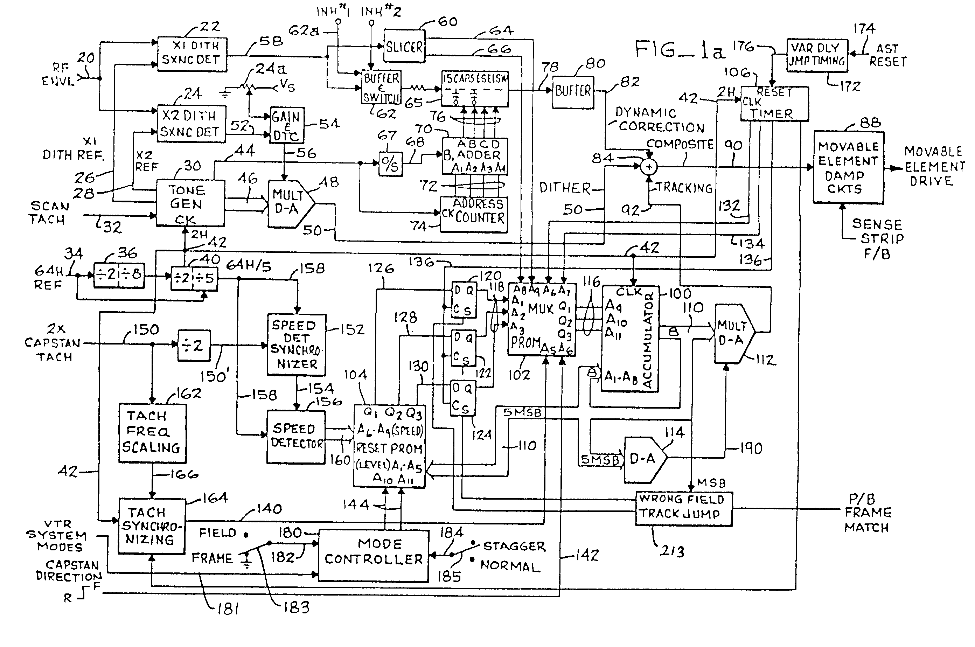

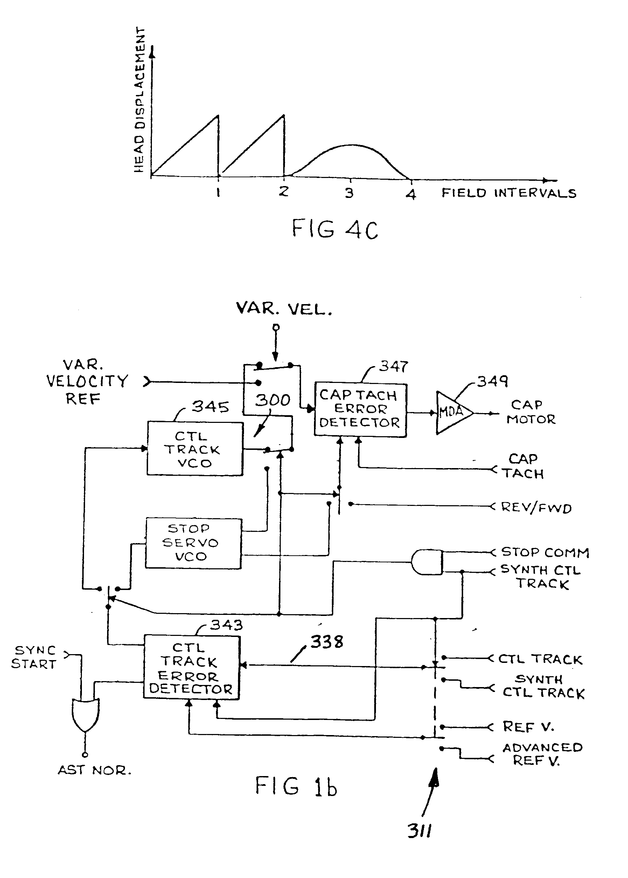

Turning now to the drawings, and particularly FIG. 1(a) , a block diagram of the automatic head position tracking servo system embodying the present invention is illustrated. The reproduced RF envelope video signal is applied to an input 20 that extends to a pair of synchronous detectors 22 and 24 of conventional design, the synchronous detector 22 operating to detect the fundamental component of the dither signal, with the synchronous detector 24 operating to detect the second harmonic component of the dither signal. The signals which switch the synchronous detectors are coupled thereto via lines 26 and 28, the switching signals being generated by a tone generating circuit 30 that is synchronized by a rotating head tachometer signal synchronous with the rotation of the deflectable video head reproducing the RF envelope video signal. This signal is at a 60 Hz rate for a single rotary head type system designed for 60 Hz television signal line standards. In such systems designed for the 50 Hz television signal line standards, the tachometer signal is at a 50 Hz rate. In either case, the tachometer signal frequency happens to be exactly the rate of rotation of rotary head. Thus, the signal is commonly referred to as once around drum or scanner tach and is applied on input line 32 to synchronize the tone generator to the rotation of the deflectable video head. The tone generating circuit 30 is clocked by a clock signal having a clock rate of two times the horizontal line frequency, i.e., a 2H clock, that is derived from a 64H reference clock derived from the system reference timing signal, commonly, studio sync and applied on a line 34. The frequency of this signal is divided by a series of cascaded dividers, namely, a divide by two circuit and a divide by eight circuit 36 followed by a divide by two circuit 40, which provides the 2H clock on line 42 that is connected to the tone qenerator 30. The tone generator generates a number of output clock signals, including the twice dither frequency reference signal on line 28, as well as the one times the dither frequency reference signal on line 26. The tone generator also provides a square wave signal on line 44 that is at a rate of 15 cycles per field (or 900 Hz for 60 Hz line standard systems or 750 Hz for 50 Hz line standard systems) which is used to control the dynamic tracking error correction circuitry, to be described hereinafter. Dynamic tracking error corrections serve to compensate tracking errors experienced by the movable element as a result of periodic repetitive disturbances that are related to the head rotation frequency. In other words, nonlinear tracking errors that occur at the frequency of head rotation are corrected. These periodic errors are typically generated as a result of interchange errors, i.e., errors resulting from a recording made on a machine other than the machine from which the video information signal is being reproduced because of different tracking geometries of the two machines. Equivalent errors result when the tape guide parameters of the same machine are changed between the recording and reproducing of the video information. The frequency of the square wave signal on line 44 is two times the dither frequency (the dither frequency is 450 Hz in the 60 Hz line standard systems and 375 Hz in the 50 Hz line standard systems) and causes the dynamic tracking error correction circuitry to sample the tracking error signal fifteen times per head revolution, hence, field. The tone generator 30 also provides a 5-bit digital representation of a sine wave of a frequency equal to 450 Hz (or 7-1/2 Hz per field) on lines 46 that are applied to a multiplying digital-to-analog converter 48, the output of which is an analog sine wave on line 50 forming the dither signal that has a controlled dither amplitude.

The output level of the two times dither frequency synchronous detector 24, which operates at twice the dither frequency, provides a signal on line 52 that varies in accordance with the detected second harmonic component of the amplitude modulated RF video envelope reproduced from the tape. When the reproducing head is on track, the amplitude modulated RF video envelope will have a scalloped waveform that occurs at two times the dither frequency and the output of the synchronous detector appearing on line 52 will be at a particular desired voltage. When a head position tracking error occurs, the second harmonic component of the amplitude modulated RF video envelope reduces proportionately which produces a concomitant decrease in the output provided by the twice frequency detector 24. The output of the detector 24 is coupled by line 52 to a servo loop compensation amplifier 54, whose output is applied by line 56 to the digital-to-analog converter 48. In response to a change in the output provided by the twice frequency detector 24 of a selected magnitude determined by the setting of the potentiometer 24a, the amplifier 54 provides a correspondingly changed signal to the converter 48, which generates the dither signal applied to the movable head. The multiplying digital-to-analog converter responsively increases the amplitude of the dither signal applied to the movable element supporting the head, which increases sensitivity of the head positioning servo loop.

Thus, by selectively altering the amplitude of the dither signal on line 50 that is applied to the movable element and supported head in the above-described manner, the error correction capability is improved in several respects. It provides an aid in holding a generally low constant dither level as is desired when tracking error is small, but one that is effective for head position tracking purposes. When the head starts to mistrack, producing a tracking error signal, the dither amplitude is increased to increase the sensitivity of the head position tracking servo, which aids in the correction of the mistracking. Moreover, the relatively low amplitude dither signal does not produce an appreciable detrimental effect in quality of the RF video signal being reproduced.

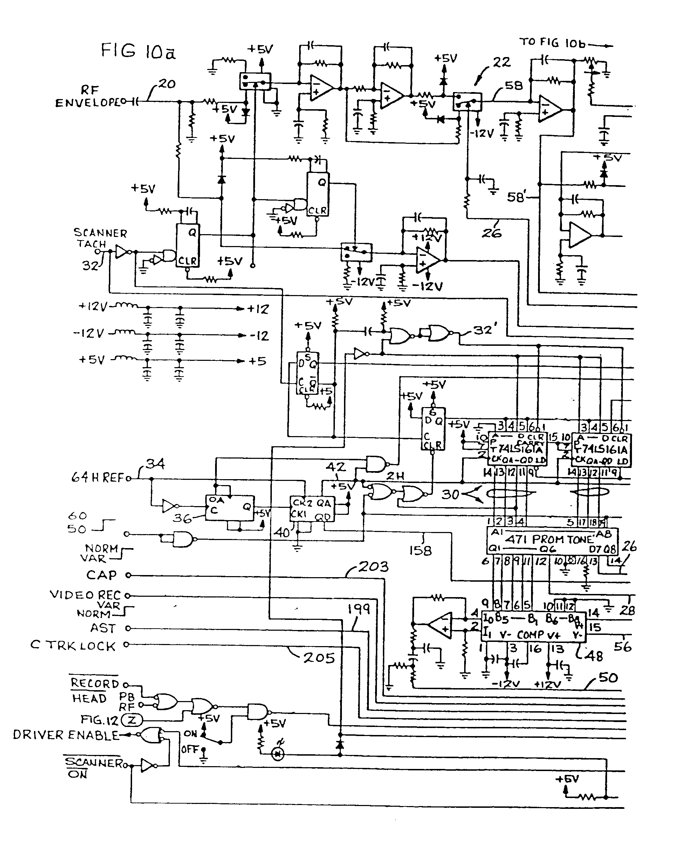

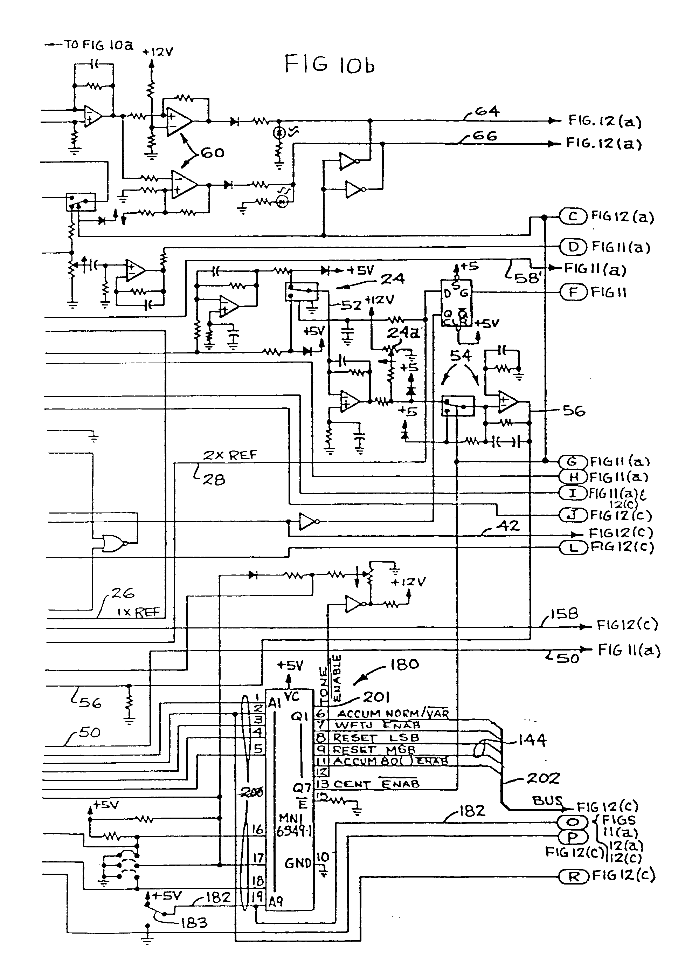

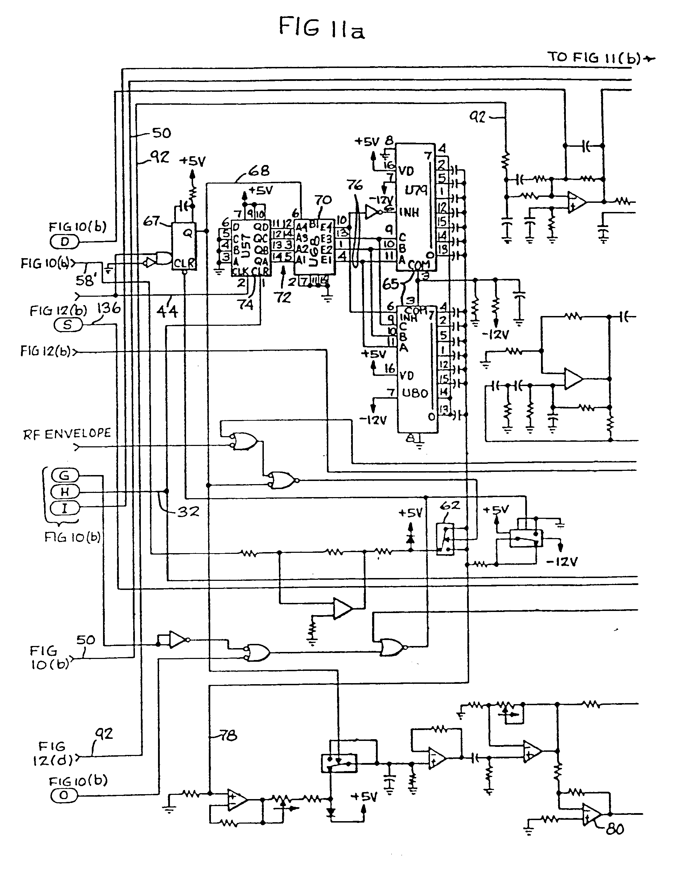

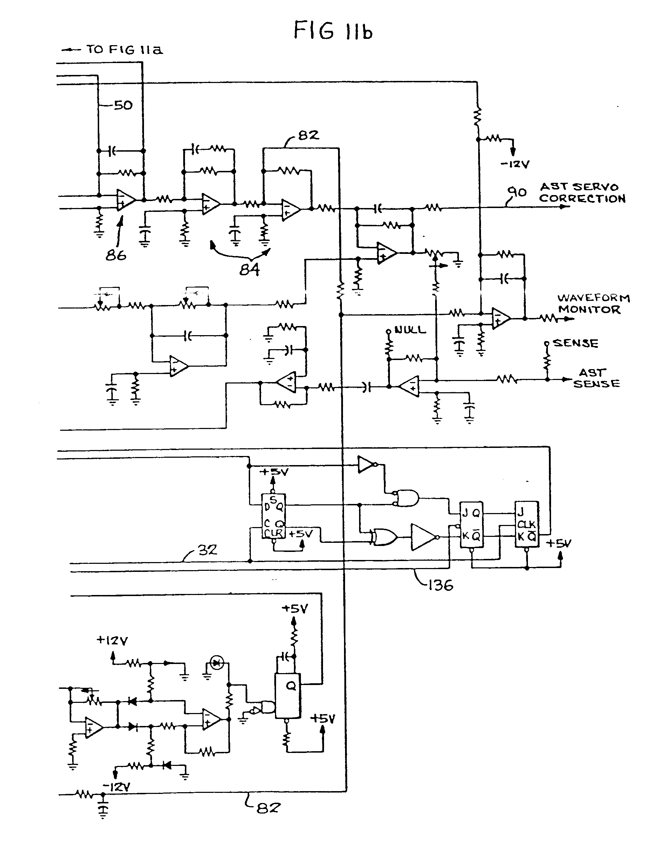

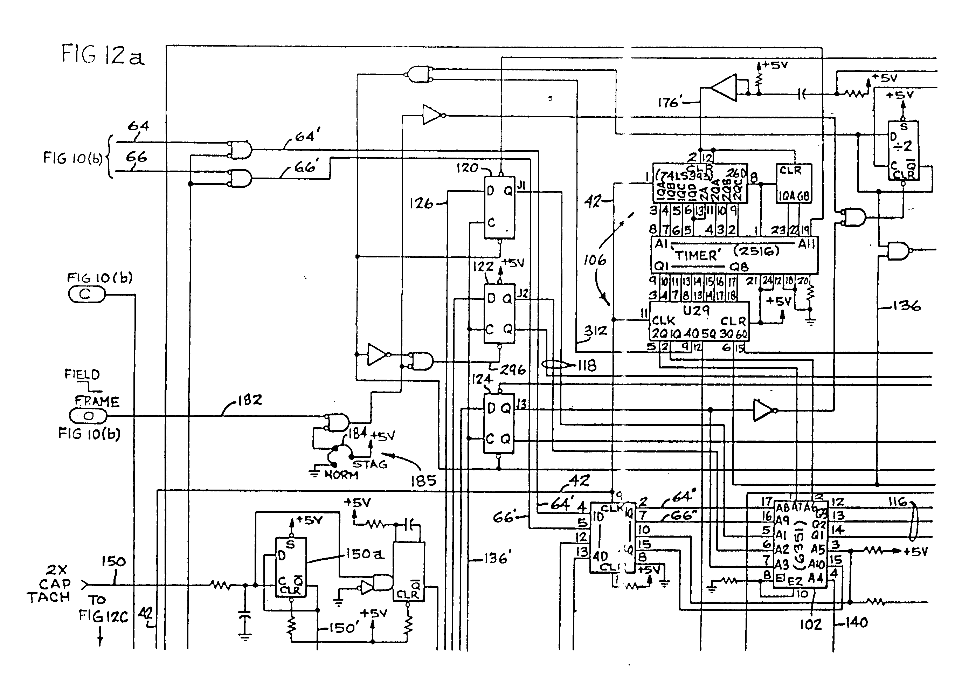

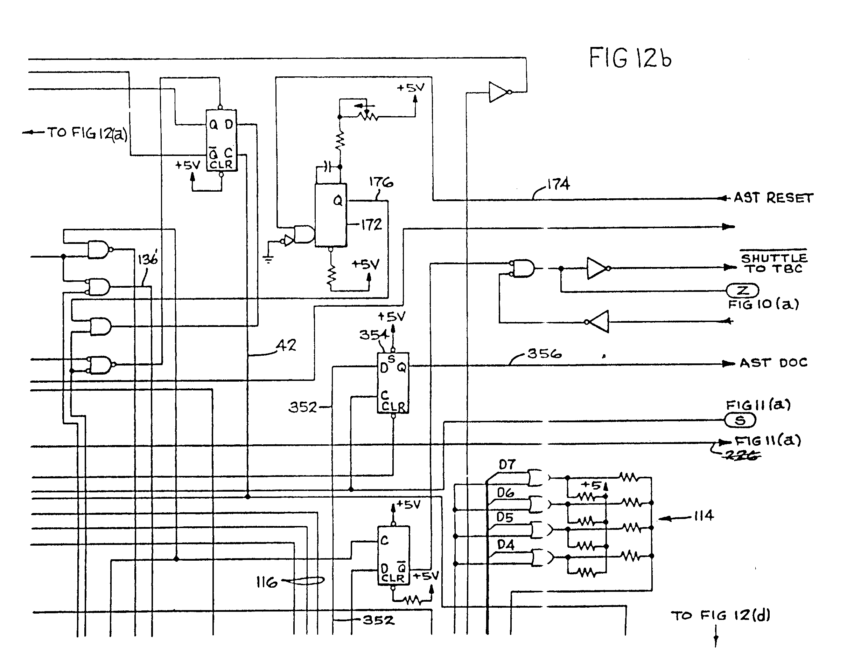

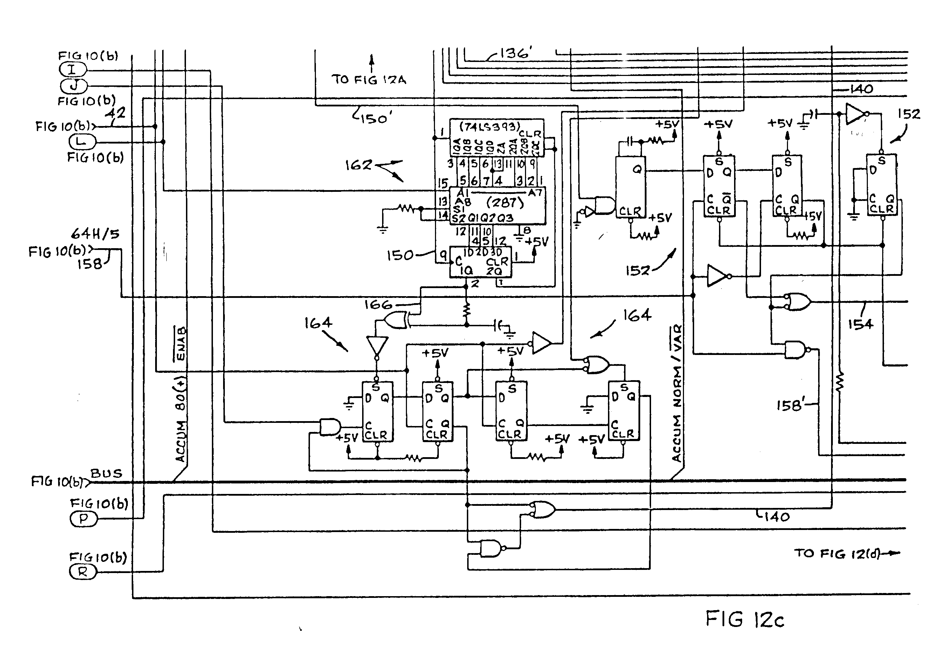

The output of the fundamental dither frequency synchronous detector 22 appears on line 58 and is applied to a slicer circuit 60 as well as to a buffer and switch circuit 62. The slicer 60 determines an offset or centering error. The output of the buffer and switch 62 is applied to a dynamic tracking error correction circuit to be described. The slicer circuit effectively determines if the error detected by the synchronous detector 22 is above or below predetermined threshold values and provides an active digital output on one of the lines 64 or 66 extending to the head position low rate error servo loop, if the value is above or below threshold values at a particular time. In the preferred embodiment, the servo system of the present invention utilizes the slicer output to provide two samples per field representative of the average head position error, one occurring when the video reproducing head is approximately 1/4 of the way through its scan of a track and the other occurring when the head is approximately 3/4 of the way through the scan of track. The output levels on lines 64 and 66 are merely digital signals and, normally, only one of the two signals can be active at a time, indicating an error that is beyond a threshold level in a particular direction. If the detected error is not beyond a predetermined threshold level, then neither of the lines 64 or 66 will be active and no track error or centering correction need be made. If either of the lines is active, then as will be more fully described hereinafter, there will be a small incremental adjustment of the movable element to center the head on the track. As will be explained in further detail hereinafter, when a forced centering of the moveable element is required, the operation of the slicer 60 is overridden to cause active signals to be placed on both lines 64 and 66 to effect the forced centering. It should be appreciated that the slicer circuit 60 provides output signals on the lines 64 and 66 generally continuously, but the operation of the following circuitry only applies the levels to the remaining portion of the servo circuitry at predetermined times, which in the preferred embodiment is only two times during each revolution on the rotating head, as previously mentioned. The detailed circuitry forming the aforedescribed portion of the automatic head position tracking servo system of the present invention and the mode controller 180 to be described in detail hereinafter is illustrated in FIGS. 10A and 10B.

With respect to the dynamic or high rate error correction circuitry, the output of the synchronous detector 22 present on line 58 is applied to the buffer and switch 62 which effectively samples the head position tracking error at 15 sample locations during each field of revolution of the head, but which results on only 14 actual samples of meaningful information, because one of the samples occurs during a mechanical drop-out interval occurring during each revolution of the rotating head and therefore does not contain meaningful information. The buffer and switch 62 circuit applies the value of the detected dynamic tracking error signal present on line 58 to a capacitor and selector switch indicated generally at 65 which operates to integrate the dynamic error over many fields and store the integrated value of the samples error on one of the fourteen capacitors of the capacitor and selector switch at particular times during each revolution of the head. The signal on line 44 extending from the output of the tone generator 30 is applied to a one-shot or monostable multivibrator 67 which provides a short duration output pulse on line 68 extending to one input of an adder 70 during each cycle of the 900 Hz signal appearing on line 44. The adder responds to the short duration pulse provided by the one-shot 67 to add a count of one to the digital count signal that is applied to the adder's input lines 72. At other times during the period of the one-shot 67, hence, each cycle of the 900 Hz signal on line 44, when a pulse is not provided to the adder 70, a digital count signal is provided by the adder 70 which is one count less. The count at these input lines originates from an address counter 74 that is clocked by the signal on line 44 from tone generator 30. Thus, the output of adder 70 appears on lines 76, which addresses in sequence the fourteen capacitors included in the capacitor and selector switch 65 once during each interval. During the period of the one-shot 67 when a pulse is not provided over line 68 to adder 70, the adder addresses a capacitor to effect a grounding of the capacitor at the appropriate time so that the grounded capacitor's charge level can be altered in accordance with the sample track error at its sample time determined by the address applied over lines 76. Each of the capacitors included in the capacitor and selector switch 65 is grounded in sequence once during each revolution of the rotary head in accordance with the address signals provided over lines 76. Since each of the capacitors stores an average value of the charge applied to it at a particular sample time synchronous with the rotation of the video head (which therefore corresponds to a particular location of the head along the scan of a track), the charge that accumulates on each of the fourteen capacitors reflects the average value of the error at a particular rotational position of the video head over a great number of samples.

Since the charge on each of the capacitors reflects the detected dynamic tracking error, and because there is a delay in the response of the movable element to the application of a head tracking error correction signal, it is necessary to provide the output of the capacitors to the movable element at a time prior to that when the correction is desired so that the proper correction of the dynamic tracking errors results. For this reason, the adder circuit 70 is controlled by the one-shot 67 to add a count of one to the output of the counter 74 when a value is applied to the output line 78 of the capacitor and selector switch 65 so that the delivery of each of the proper error correction signals to the movable element will be initiated at a time that is advanced by an amount which compensates for the delay in response of the movable element supporting the rotating head. The output line 78 is connected to a buffer 80 which provides the dynamic error correction output signal on line 82. The dynamic error correction signal is coupled by line 82 to a summer 84, which sums the dynamic error correction signal with the dither output on line 50 and the average head position tracking error signal on line 92. The output of summer 84 is a composite head position error correction signal that is applied to following movable element deflection damping circuits indicated generally at 88 via line 90 for subsequent application to the movable element deflection drive circuitry (not shown).

From the foregoing description, it is apparent that the dynamic head position tracking error correction signal is applied to the head drive directly as an analog signal whereas the offset signals that are produced by the slicer 60 are not directly applied to the summer 84, but instead are applied to other circuitry that operates in the digital domain to determine the average head position tracking error correction signal until the final analog signal form thereof is applied to the summer 84 via a tracking line 92.

The dynamic error correction circuit is inhibited from updating the voltage values stored on the capacitors contained in the capacitor and selector switch 65 during modes of operation productive of a deflection signal having a component of n/2 times the rotation rate of the head, where n is an odd number, e.g., when operating at one-half speed slow motion reproducing, that has potential for causing the generation of an undesirable erroneous tracking error correction signal. This is accomplished by an inhibit INH#1 signal applied to the buffer and switch 62 over line 62a by virtue of the operation of the reset circuit 104 detecting the apparatus operating at a tape transport velocity productive of the requirement of a deflection signal having such n/2 component. As discussed hereinbefore, the dynamic error correction circuitry operates to accumulate charge very slowly on the capacitors of the capacitor and selection switch 65 and the dynamic tracking error accumulates over a large number of revolutions of the head. It should be appreciated that there are many spurious noise signals present that do not reflect true dynamic tracking error. When the recording and reproducing apparatus is operating at normal reproducing speeds, the dither phase alternates every recorded track, hence, video field. By virtue of the fact that the dither phase alternates in this manner, if each track, hence, field is reproduced once in the sequence that the tracks were recorded, the spurious signals cancel one another, but the periodic tracking error signal is not cancelled. However, during operation at one-half speed or other modes resulting in a deflection signal being applied to the movable element having the aforedescribed undesirable n/2 component, the spurious signals resulting from the deflection signal applied to the movable element do not alternate in phase and cancel. Consequently, the capacitors would average the spurious signals in addition to the true dynamic tracking error. By virtue of the fact that the spurious signals can be very large, the dynamic error correction circuitry would provide an erroneous output tracking error correction signal. For this reason, circuitry is utilized to inhibit the updating of the capacitors when the apparatus is operated in such modes, which will be described hereinafter in conjunction with the specific circuitry shown in FIGS. 11(a) and 11(b).

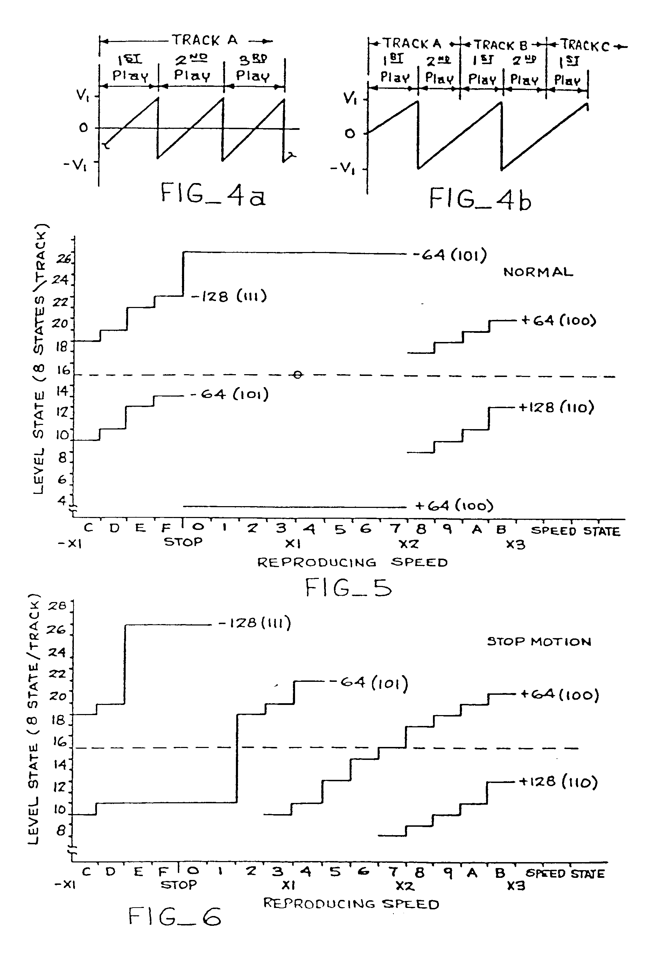

The automatic head position tracking servo system is capable of providing average head position tracking error correction signals to the summer 84 via the line 92 which correctly positions the movable element and transducing head to effect accurate following of a track, and also provide signals which accomplish the repositioning of the transducing head as is required during special motion effect reproducing. The required movement of the movable element and carried head during various special effect reproducing tape transport velocities, such as stop, variable velocity slow motion and fast motion are comprehensively described in GB-A-1579854 as well as in US-A-4,163,993. While all of the patterns of movement or displacement waveforms required of the head for various reproducing modes and tape transport velocity will not be described herein, reference is made to FIGS. 4(a) and 4(b) which show representative examples of such movable element displacement patterns.

FIG. 4(a) is illustrative of the displacement waveforms for the movable element and supported head during stop motion reproducing operations of a single track of recorded information wherein one field of video information recorded on a single track is repetitively reproduced. In such instance, it is required to reset the head a distance corresponding to one track center-to-track center spacing at the end of each reproduction of the track of recorded information. As the head follows a track during its reproduction, the automatic head position tracking servo system causes it to accurately follow the track and, if the track of recorded information is to be repetitively reproduced, the head is reset by the one track center-to-track center distance in order to position it to begin following the same track during the next rotation of the head. Similarly, and referring to FIG. 4(b), if the recording and reproducing apparatus is operated to reproduce from the tape as it is transported at half normal velocity during slow motion reproducing operations, the reproduction of each track or field of recorded information must be repeated once before the head is permitted to advance to reproduce the next track of recorded information. Thus, every recorded track is reproduced twice, and the second reproduction of the recorded track requires the movable element and supported head to be reset by the one track center-to-track center spacing distance.

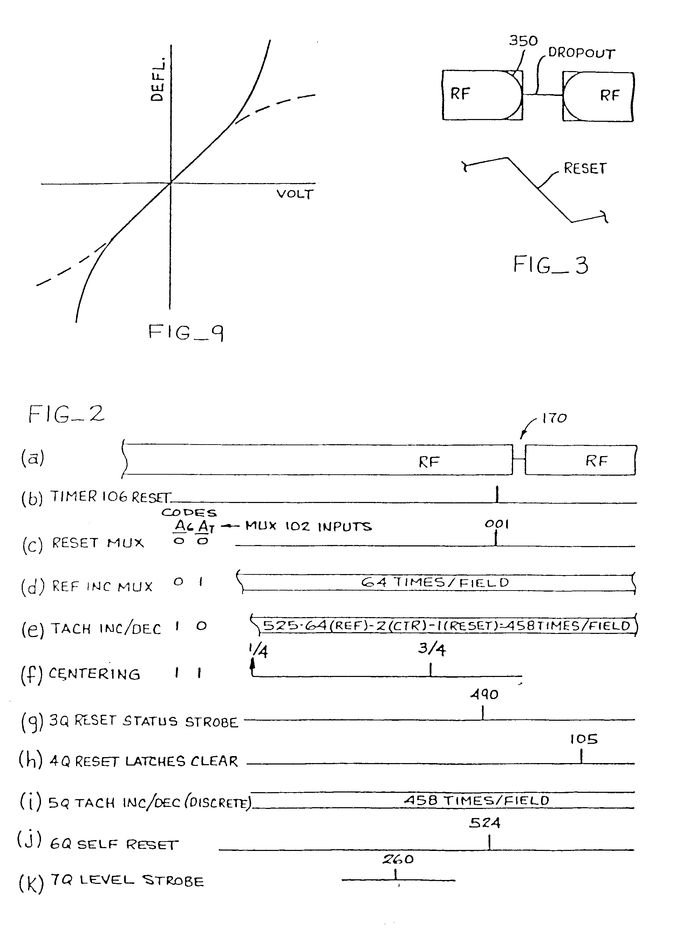

The circuitry which effects the tracking correction (with the exception of the dynamic tracking error correction previously discussed) and the selective resetting of the movable element and transducing head is shown principally in the lower portion of FIG. 1(a)). This tracking correction circuitry includes an accumulator circuit 100, a multiplexing circuit 102, a reset circuit 104, and a timer circuit 106 (located at upper right part of Fig. 1(a), all of which preferably are associated with a programmable read only memory as a principal component. The accumulator circuit 100 has an 8-bit digital output line 110 that is applied to a multiplying digital-to-analog converter 112, as well as to a set of recirculating inputs to itself. The five most significant bit lines of the 8-bit lines 110 are also applied to another digital-to-analog converter 114 and to the reset PROM 104. The accumulator 100 has three address lines 116 that are connected to the output of the multiplex circuit 102. One set of inputs A8, A9 of the multiplex circuit is coupled to lines 64 and 66 extending from slicer 60, which provide the offset error signal determined by the dither servo loop, as previously described. In addition, another set of inputs A1, A2, A3 of the multiplex circuit 102 is coupled to lines 118 extending from D flip-flops 120, 122 and 124. These flip-flops have their respective D inputs supplied by lines 126, 128 and 130 from the reset circuit 104. The timer circuit 106 provides a 2-bit binary word signal on its output lines 132 and 134, which are applied to the control inputs A6, A7 of the multiplexing circuit 102, as well as a 2H clock signal on line 136 that clocks the D flip-flops 120, 122 and 124. As will be described in further detail hereinafter with reference to Fig. 2, the 2-bit binary word signal provided over lines 132 and 134 cycles through a certain sequence of 2-bit binary words at a reference 2H rate and determines which of the other sets of inputs to the multiplex circuit 102 is interrogated to determine the signal states thereat, which in turn determine the address signal output to the accumulator 100. The multiplexing circuit 102 also receives a capstan tachometer input signal over line 140 and a capstan direction input control signal over line 142 at another set of inputs A4, A5. The capstan tachometer input line 140 extends from the output of a tach synchronizing circuit 164, which functions to synchronize in time each received frequency converted capstan tachometer pulse to the occurrence of the 2H signal derived from the system reference timing signal and provided over line 42.

The accumulator 100 provides 8-bit binary output words in hexidecimal notation on lines 110, which are applied to a multiplying digital-to-analog converter 112. The converter responds by providing corresponding analog output signal on line 92, which controls the magnitude and direction of any repositioning movement that is to be made by the movable element carrying the video head that is to be repositioned. The accumulator is capable of providing 256 separate output levels in accordance with Table I illustrated below.

**Table I**

| Accumulator Code | | | |
|---|---|---|---|
| Binary States at Inputs | | | Output Level Change |
| A9 | A10 | A11 | |
| 0 | 0 | 0 | No output change |
| 0 | 0 | 1 | +1 |
| 0 | 1 | 0 | To Center (Hex 80) |
| 0 | 1 | 1 | -1 |
| 1 | 0 | 0 | +64 |
| 1 | 0 | 1 | -64 |
| 1 | 1 | 0 | +128 |
| 1 | 1 | 1 | -128 |

The accumulator 100 is capable of causing the execution of eight separate operations on the recirculated eight bit input in accordance with Table I illustrated above. The eight separate operations are determined by the binary signal present on input address lines 116 that a multiplexer circuit 102, which in turn is determined by the other circuit components as will be described. When the address lines 116 are in the states illustrated in Table I, various corresponding changes occur in the output signal on output lines 110, which cause the execution of corresponding operations.

When the address lines 116 carry a "000" address signal, it signifies that no change has occurred in the signal condition at the interrogated input to the multiplexer circuit 102 since the last interrogation of that input. Consequently, the states on the accumulator output lines 110 are left unchanged, which is identified as a no output change condition. When this condition occurs on the output lines, the automatic head position tracking system does not provide a responsive change in its operating state with respect to the positioning of the movable element supporting the video head. The unchanged 8-bit binary word output by the accumulator 100 is applied back to its input lines whereby the output word is merely recycled or recirculated through the accumulator each time the accumulator is clocked by line 42.

A "001" address signal input on lines 116 results in a +1 binary bit change in the accumulator 100 output on lines 110. Therefore, each time the 001 address signal is present on input lines 116, the accumulator output is changed +1 binary bit, and if this address signal remains present on the input lines 116, for a number of consecutive clock intervals, the accumulator output is changed +1 binary each time the accumulator 100 is clocked. A "011" address signal input on lines 116 results in a -1 binary bit change on lines 110. These +1 and -1 output changes cause the multiplying D-to-A 112 to provide a very small corresponding head position tracking error correction as would occur as a result of one of the slicer output lines 64 or 66 being active or as a result of the need to displace the movable element and supported head a small amount to adjust for a change in tape transport velocity since the last clock time of the accumulator 100.

Logic circuitry, which is described in further detail hereinafter with reference to FIGS. 10-12, overrides the slicer 60 to place active signals on both lines 64 and 66 whenever the mode controller 180 issues an accumulator disable signal and the slicer 60 places an active signal on either one of its two outputs. If an active signal is present on both lines 64 and 66, a "010" is applied to address lines 116 by the multiplexer circuit 102. The accumulator 100 responsively provides a hexidecimal binary signal output on lines 110 corresponding to decimal eighty (80H) until centering operation is completed. Upon completion of the centering operation, the active signals are removed from the lines 64 and 66. While the centering operation is being performed, the accumulator 100 is placed in an operating condition causing the accumulator to ignore all other address inputs received during the centering interval. This output is applied to the D-to-A converter 112, which responsively forces the movable element to its nominal home position regardless of the operating condition of the recording and reproducing apparatus.

A "100" digital word on address lines 116 results in a +64 binary bit change on output lines 110, which in turn results in a signal being applied to line 92 that causes a one track repositioning movement of the movable element in one direction, while a "101" digital word on address lines 116 results in a -64 binary bit change. These two accumulator output changes cause the movable element to be reset one track in opposite directions. Similarly, a "110" digital address word on lines 116 causes a +128 binary bit change on output lines 110, which causes a two track repositioning or reset of the movable element in the first direction, while a "111" digital address word on address lines 116 results in a -128 binary bit change on output lines 110, which causes a two track reset in the opposite direction. The output circuitry of the automatic head position tracking servo system is scaled such that a change of 64 results in a repositioning of the movable element by an amount equal to one track center-to-track center spacing, while a change of 128 results in a repositioning of a distance corresponding to a two track center-to-track center spacing.

From the foregoing, it should be appreciated that the accumulator 100 is capable of providing updated 8-bit digital output words of predetermined magnitude to the multiplying digital-to-analog converter 112 in response to 3-bit digital address words being applied to the input thereof from the multiplexing circuit 102. The digital output words are updated in the sense that each digital output word is recirculated and applied to the input of the accumulator and, at the next clock time, the recirculated digital output word is changed by an amount corresponding to the address carried by the lines 116. The multiplexing circuit 102 is controlled by the timer circuit 106 to output the 8-bit binary signals stored in an operatively associated PROM according to the inputs on lines 64 and 66, on lines 118 and on lines 140 and 142 at their respective interrogation times determined by the 2-bit binary input signal received from the timer 106.

With respect to the reset PROM 104, it generates reset determination signals at the end of each revolution of the rotating head as a function of the transverse position or elevation of the movable element and transducing head, the velocity of movement of the tape and the mode of operation of the recording and reproducing apparatus. The value of the digital signals on lines 110 at any particular time is indicative of the elevation of the head, i.e., the amount of deflection of the movable element relative to its home or nominal undeflected position. Of course, any other method of detecting the position of the movable element at the end of each revolution of the rotating head could be employed for this purpose. The five most significant bits present in the 8-bit binary signal on lines 110 provide adequate position information and, therefore, are applied to the reset PROM 104 for providing elevation position signals to the same for addressing the storage locations in which reset determination signals are held corresponding to certain directions and speed ranges of transport of the tape and modes of operation of the recording and reproducing apparatus. Similarly, mode control lines 144 are coupled to the reset PROM 104 and these mode lines are impressed with signals indicative of the operating mode of the apparatus. These signals form part of the reset PROM address signal that determines the reset determination signal retrieved from the storage locations of the reset PROM and provided on output lines 126, 128 and 130. As previously mentioned, the reset determination signal provided by the reset PROM 104 is affected by the speed of movement of the tape. Signals indicative of the tape speed forming part of the reset PROM address signal that determines the reset determination signal output by the rest PROM 104 are provided by the speed detector circuitry 156 over lines 160.

As will be appreciated from the foregoing, the reset PROM 104 has reset determination signals stored in addressable storage locations which are addressed for outputting over lines 126, 128 and 130 according to a three part address signal. One part of the reset PROM address signal is a 4-bit binary signal in hexidecimal notation provided over lines 160 by the speed detector 156, which is indicative of the speed of tape transport. A second part of the reset PROM address signal is a 5-bit signal provided over lines 110 by the accumulator 100, which is indicative of the position of the movable element. The third part of the three part address signal is a 2-bit signal provided over lines 144 by the mode controller 180, which is indicative of the operating mode of the recording and reproducing apparatus. As will be described in further detail hereinafter, the 2-bit signal provided by the mode controller 180 determines which of the stored reset determination signals are selected in accordance with the tape speed, tape transport direction and movable element position parts of the three part address signals. Different operating modes will result in the selection of different stored reset determination signals for a given tape transport velocity.

The mode controller 180 is responsive to the tape recording and reproducing apparatus being placed in a tape velocity change operating mode to provide a 2-bit signal over lines 144 that results in the accumulator 100 providing a tracking error correction to the movable element that effects tracking of recorded tracks during the tape velocity change interval without incrementally adjusting or resetting the movable element whereby each track of a sequence of tracks of recorded information is reproduced once during the velocity change interval. More specifically, the 2-bit signal provided by the mode controller 180 conditions the addressing of the reset PROM 104 so that a reset determination signals indicative of no reset is provided to the accumulator 100 over lines 126, 128 and 130 via lines 118 regardless of the speed of tape transport and position of the movable element (within its deflection range limits) over the range of the tape transport velocity change. (In the preferred embodiment, reset determination signals indicative of track resets by the movable element are provided by the reset PROM 104 at tape transport velocities outside the range of zero tape transport speed, or stop, to 2X such normal velocity in the forward direction of tape transport as a precaution against abnormal operating conditions of the recording and reproducing apparatus.)

The aforementioned reset-free special velocity change operating mode is preferably accomplished by conditioning the mode controller 180 to provide a 2-bit signal corresponding to the recording and reproducing apparatus being in normal record and reproduce operating mode. As will be described in further detail hereinafter with reference to FIG. 5, the mode controller 180 issues a 2-bit signal at the onset and thereafter during normal reproduce operations that causes the selection of reset determination signals stored in the reset PROM 104 only when the position of the movable element approaches either of its deflection range limits. This is done to reset the movable element to its mid-range deflection. During the velocity change operating mode when no resets are desired, similar mid-range resets of the movable element are desired. Therefore, the mode controller 180 provides the aforementioned 2-bit signal corresponding to a normal record and reproduce tape transport velocity operating condition during this special velocity change operating mode so that one track reset determination signals are selected whenever the 5-bit movable element position signal provided by the accumulator 100 over lines 110 to the reset PROM 104 is indicative of the movable element approaching either of its deflection range limits.

A 2x capstan tachometer frequency signal present on line 150, which is indicative of the angular speed of the capstan, and therefore the speed of transport of the tape, is applied through a divide by 2 divider 150a to a speed detector synchronizing circuit 152, which synchronises the capstan tachometer signal with respect to a divided 64H reference frequency signal provided over line 158, which is at a frequency of 64H/5. The synchronized capstan tachometer signal is applied via line 154 to a speed detector circuit 156, which is clocked by the 64H/5 clock signal present on line 158. The synchronizer 152 applies the synchronized capstan tachometer pulses to the speed detector 156 for determining the tape transport speed. A signal representative of that speed is applied to the reset PROM 104 via the four lines 160, which in effect, is capable of providing a 16 digital state speed detection capability for use by the reset PROM in determining the movable element track jumps or resets during operation in the various special motion effect modes.

The 2x capstan tachometer signal on line 150 has a resolution so that it produces a signal having a frequency of 2H/5 at the normal record/reproduce tape transport velocity, which means there are 105 tachometer pulses per field, for example, in 60 Hz line frequency standard equipment. (125 tachometer pulses per field are provided in equipment designed for 50 Hz line frequency standards.) This signal is applied to a frequency scaling circuit 162 that converts the 105 (or 125) tachometer pulses per field to 64 pulses per field so as to have the same frequency as the reference timing related clock signal generated by the reset timer 106 and provided on line 136. This signal is applied to a tachometer synchronizing circuit 164 via line 166 and provides the processed tachometer pulses on line 140 that are applied to the multiplexer 102. The tachometer synchronizing circuit 164 serves to store tachometer pulses for application to the multiplexer 102 at the appropriate time together with the capstan direction input signal on line 142 as determined by 2-bit binary signal provided by the timer circuit 106 so that the corresponding addresses can be subsequently applied by the multiplexer 102 to the accumulator 100 at the appropriate time for formation of the tracking error correction signal in accordance with the velocity of transport of the tape.

The timer circuit 106 is clocked by a 2H clock signal present on line 42 derived from the system reference timing signal. Therefore, the timer circuit provides 525 time cells each field for controlling the multiplexer 102 to provide the appropriate 3-bit address signals over lines 118 to the accumulator 100. The timing of the signals that are applied by the multiplexer 102 to the accumulator 100 can be more readily appreciated by reference to the timing diagrams of FIG. 2 in conjunction with the block diagram of FIG. 1(a). FIG. 2(a) illustrates the reproduced RF portion of two consecutive fields, with a signal drop-out interval separating the two fields shown generally at 170. As is well known, in helical tape recording and reproducing apparatus utilizing a single rotating head to record and reproduce information from the tape during each revolution of the head (for which the preferred embodiment of the automatic head tracking position servo system of the present invention is arranged), the rotating head is out of engagement with the tape for a short interval during each revolution of the head. This out of engagement condition causes the mechanically related drop-out interval 170 in the reproduced RF signal illustrated in FIG. 2(a). FIG. 2(b) illustrates an input signal from a delay circuit 172 that is triggered by an AST reset signal on line 174, which is derived from the aforedescribed once around scanner tachometer signal. The AST reset signal is at the television field rate and is derived from the once around scanner tachometer signal and retimed to the desired occurrence of the AST reset signal. The delay 172 retimes the once around related signal on line 174 so that an active signal is placed on line 176 for resetting the timer circuit 106 at a time before the occurrence of the drop-out interval 170 corresponding to 0.5 millisecond (ms). The active signal placed on line 176 prior to the occurrence of a drop-out interval is derived from the once around scanner tachometer signal produced during a previous revolution of the head supported by the movable element.

At the first 2H clock pulse time following each reset of the timer 106, the timer outputs a 2-bit binary signal on lines 132 and 134 extending to the inputs A6, A7 of the multiplexer 102. The multiplexer responds to this 2-bit binary signal to couple input lines 118 to the address input of its operatively associated PROM. If a reset is to be made at this time, as determined by the signal condition stored at the output of reset latches 120, 122 and 124, the PROM outputs the appropriate reset determination signal to the accumulator 100 over address lines 116. In the preferred embodiment of the automatic head position tracking servo system, the PROM outputs a command that causes associated logic circuitry to connect the outputs of latches momentarily to the address lines 116. This reset timing is shown in FIG. 2(c), with the initiating 2-bit binary signal placed on lines 132 and 134 by the timer 106 indicated in the column headed "CODES - A6, A7".

As previously mentioned, the decision to reset the movable element in a particular direction and a particular distance for each selectable operating mode of the recording and reproducing apparatus is determined by the position, i.e., level or elevation, of the supported head (determined by the value of the five most significant bits of the 8-bit binary signal output by the accumulator 100 on lines 110 that extend to one of the inputs to reset PROM 104) and the tape velocity represented by the 4-bit binary tape velocity related signal provided by the speed detector 156 over lines 160 extending to a second input to the reset PROM. The 2-bit operating mode related signal on lines 144 extending to the third input of the reset PROM 104 changes the output provided by the reset PROM in response to the signals received at the other PROM inputs as a function of the operating mode of the recording and reproducing apparatus. The head position level states represented by the aforementioned five most significant bits of the 8-bit binary signal on lines 110 that result in the provision of a reset determination signal to the accumulator 100 that causes the movable element to be reset a distance corresponding one or two tracks at particular velocities of tape transport are shown for various operating modes in FIGS. 5-8.

During reproducing operations when the tape is transported at the normal record and reproduce velocity, the reset PROM 104 is conditioned by the 2-bit binary signal provided by the mode controller 180 at inputs A10, All to issue reset determination signals over lines 126, 128 and 130 in accordance with the velocity of tape transport and position of the movable element illustrated by the graph of FIG. 5. The abscissa of the graph is expressed in units of 32 possible movable element position states represented by the five most significant bit portion of the output of the accumulator 100 provided to the reset PROM 104 over lines 110. The ordinate of the graph is expressed in units of the aforementioned 16 possible tape speed states (in hexidecimal notation) represented by the tape velocity related signal provided to the reset PROM 104 over lines 160 by the speed detector 156. As illustrated in FIG. 5, the reset PROM 104 issues a reset determination signal to the multiplexer 102 that is indicative of a no reset operation while the tape is transported at the normal record and reproduce velocity as long as the movable element is positioned away from its deflection range limits. In addition, for reasons that will be explained in further detail hereinafter with respect to the aforementioned special velocity change operating mode without reset, the reset PROM 104 issues such reset determination signal over a tape transport velocity range from zero speed to 2X the normal record and reproduce speed in the forward tape transport direction when the mode controller 180 receives an operator initiated command indicative of the recording and reproducing apparatus being placed in the special velocity change operating mode over input line 181. The mode controller 180 responds to such command by issuing a 2-bit binary signal to the reset PROM 104 that conditions it to provide reset determination signals corresponding to the normal record and reproduce tape velocity operating mode.

During the normal record and reproduce tape velocity operating mode, the tape transport operates to transport the tape at a velocity that causes the output of the speed detector 156 to toggle between speed state signals corresponding 3 and 4 shown in FIG. 5. Furthermore, no transverse movement of the movable element should occur and, if the head carried by the movable element is centered at its nominal home position, it will not be displaced in either direction. However, if the recording and reproducing apparatus is operating at the normal tape velocity speed with the movable element in an extended position approaching one of its deflection range limits, i.e., above level state 26 or below level state 2, it is reset one track distance by virtue of the aforementioned operation of the reset PROM 104 to center the same. Similar decisions for stop motion, frame only reset and variable speed reproducing are shown in FIGS. 6, 7 and 8, respectively.

In the field or one track reset stop motion operating mode, the movable element is continuously deflected in one direction towards one of its deflection range limits as the supported head scans the track. At the conclusion of the scan of the track, the position of the movable element is reset in the opposite direction a distance corresponding to one track center-to-track center spacing to position the supported head to rescan the same track again. The resetting of the movable element is preferably timed to occur during the aforedescribed mechanical drop-out interval and synchronously with the rotation of the supported rotary head. This continuous deflection and resetting of the movable element continues at the rate of rotation of the rotary head as long as the recording and reproducing apparatus remains in this stop motion operating mode, which is signified by the 2-bit signal provided to the reset PROM 104 by the mode controller 180.

As can be seen from FIG. 6, the 2-bit signal provided by the mode controller 180 conditions the reset PROM 104 to issue a reset determination signal that causes the aforementioned one track reset whenever the deflection of the movable element represented by the five most significant bit portion of the output provided by the accumulator 100 over lines 110 is greater than the deflection corresponding to level state 11. Should the movable element be in an extended position approaching its opposite deflection range limit during this operating mode, i.e., above level state 26, the reset PROM 104 issues a two track reset determination signal. These level states are selected so that the continuous deflection and resetting of the movable element occurs generally about the center of its deflection range or nominal home position. As a precaution against abnormal operating conditions of the tape recording and reproducing apparatus, the reset PROM 104 is arranged to provide different reset determination signals according to certain combinations of movable head position and tape transport velocity other than zero tape transport speed. While in the one track reset stop motion operating mode, the output of the tape speed detector 156 toggles between speed state signals corresponding to F and 0 shown in FIG. 6.

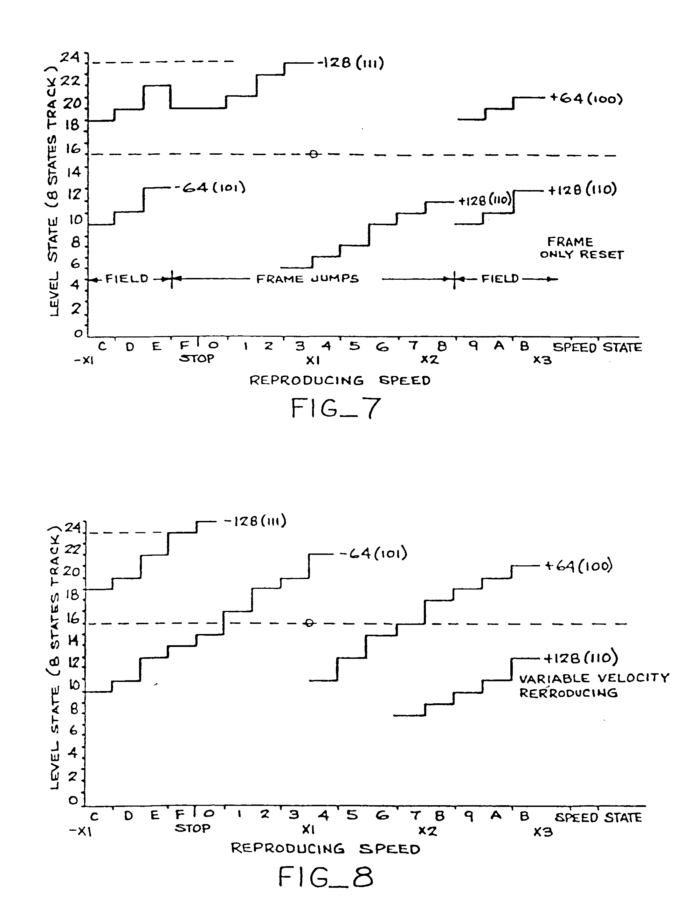

The automatic head position tracking servo system is switchable between a frame or two track reset operation and a field or one track reset operation. The two frame reset mode of operation can be selected for any tape transport velocity between a tape speed in the reverse tape transport direction equal to about 1/4 the normal record and reproduce tape transport speed and a tape speed in the forward tape transport direction of about 2-1/4 the normal record and reproduce tape transport speed. In one frame reset mode of operation, the mode controller 180 is responsive to an operator controlled field/frame selector switch 183 (FIG. 1(a)) coupled thereto by line 182 and a stagger/normal switch 185 (also seen in FIG. 1(a)) coupled thereto by line 184 to issue the appropriate 2-bit binary signal to the reset PROM 104 for causing it to issue two track related reset determination signals. The two track related reset determination signals are issued by the reset PROM 104 when switch 183 is positioned as shown and switch 185 is positioned oppositely as shown in FIG. 1(a). In this operating mode, the reset determination signals are provided by the reset PROM 104 according to the graph shown in FIG. 7. Consequently, the reset PROM 104 will not issue a reset determination signal to the accumulator 100 that causes a track reset signal to be applied to the movable element until the reset PROM receives over lines 110 a movable element position related signal indicative of a two track deflection condition. For example, with the transport of the tape stopped, i.e., a zero tape speed condition, the movable element will not be deflected to a position corresponding to a two track deflection condition until two consecutively recorded tracks of information are reproduced from the tape during two consecutive revolutions of the rotary head carried by the movable element. This two field or track reset stop motion operating mode has the advantage of enabling the reproduction of a fully interlaced 2 field television signal sequence during a stop motion operating mode.

In the other frame reset mode of operation, the mode controller 180 is responsive to issue the appropriate 2-bit binary signal to the reset PROM 104, and operatively associated logic circuitry, in turn, to issue reset determination signals according to the graph of FIG. 7 when the operator controlled switch 183 is placed in the frame position and the operator control switch 185 is placed in the stagger position, as shown in FIG. 1(a). As will be described in further detail hereinafter, switch 185 conditions the logic circuitry operatively associated with the reset PROM 104 to cause the frame or two track (or field) reset to be executed in two distinct single track resets staggered over two different reproduced tracks, which, preferably, are tracks recorded consecutively along the tape.

In the preferred embodiment of the automatic head position tracking servo system, a piezo-ceramic movable element is employed that has an effective deflection range of ±1-1/2 tracks and is operable to follow tracks at tape transport velocities extending over a range from 1X the normal record and reproduce tape transport speed in the reverse direction of tape transport to 3X the normal record and reproduce tape transport speed in the forward direction of tape transport. The permissible deflection range of the movable element limits the frame reset operation of the automatic head position tracking servo system to the aforementioned 1/4 reverse to 2-1/4 forward tape transport speeds. At tape transport velocities outside this range, the tape speed detector 156 provides 4-bit binary signals to the reset PROM that causes it to issue one track (or field) reset determination signals for effecting the reset of the movable element after each recorded track is reproduced. As described hereinbefore with reference to the field or one track reset stop motion operating mode, the level states for the frame reset mode of operation are selected so that the deflection and resetting of the movable element occurs generally about the center of its deflection range.

When it is desired to operate the tape recording and reproducing apparatus in a variable tape velocity operating mode over the entire permissible range of tape transport velocities extending from 1X the normal record and reproduce tape transport speed in the reverse direction to 3X the normal record and reproduce tape transport speed in the forward direction, the mode controller 180 is responsive to an operator initiated command received over lines 181 to issue the appropriate 2-bit binary signal to the reset PROM 104 that conditions the reset PROM to issue reset determination signals according to the graph of FIG. 8. The reset PROM 104 provides a reset determination signal to cause the accumulator 100 to issue corresponding output signals over lines 110 that cause 1 or 2 track resets to be executed by the movable element in the appropriate direction whenever the inputs to the reset PROM received from the speed detector 156 and the accumulator 100 indicate that the position of the movable element is outside the level state range bounded by the ±64 or ±128 lines shown on FIG. 8 for the tape velocity of operation indicated by the output of the speed detector 156.

The decision determinants for the various operating modes are selected to provide control of the movable element so that it desirably moves the least distance during operation and maintains a generally centered condition during continuous deflecting or ramping and reset movements. As a result of this technique of control of the movable element together with the prediction of the required slope of the ramp for maintaining the rotary head on the track at the velocity of tape transport obtained through the use of the capstan tachometer in the generation of the composite tracking error correction signal, the dither portion of the automatic head position tracking servo system need only provide the correction difference between the capstan tachometer related predicted tracking correction signal and the actual tracking error detected by the XI dither synchronous detector 22. This allows the gain and bandwidth of the automatic head position tracking servo system to be decreased without loss of effective tracking error correction. Furthermore, this permits the dither amplitude to be reduced, as described hereinbefore, when the detected tracking error is small.

Since the required displacement of the movable element is largely predicted as a function of the capstan speed as determined by the speed detector 156, the multiplexer 102 is able to provide signals to the accumulator 100 for changing its output (or not) at predetermined times rather than continuously during the scan of a recorded track by the rotary head to thereby generate the required movable element displacement signals, for example, as shown in FIGS. 4(a) or 4(b). Thus, referring to FIG. 2(d), the reset timer 106 provides a binary signal on lines 132 and 134 to the multiplexer 102 to increment the accumulator by a single count, i.e., it causes the multiplexer 102 to output an address signal of 001 for 64 times during each field uniformly spaced throughout the field interval. The reset timer 106 also controls the multiplexer 102 to interrogate the lines 64 and 66 extending from the slicer 60 two times during each field interval as shown in FIG. 2(f), for the purpose of making centering adjustments determined by the output produced by the slicer 60. As described hereinbefore, the accumulator output is changed to effect centering at times corresponding to the times when the rotary head is 1/4 and 3/4 of the way through its scan of a track.

The timing of each reset determination, accumulator incrementing reference time and centering determination periodically occurs at a fixed rate independent of the tape transport velocity synchronously with the 2H system reference timing signal. However, the incrementing or decrementing of the accumulator in accordance with the processed tachometer signal on line 140 does not so periodically occur at fixed rate independent of the tape transport velocity, since the capstan speed, hence, occurrence of the processed tachometer signal varies according to the velocity of transport of the tape. There are 458 time cells per field (525 total time cells per revolution of the rotary head minus 64 time cells set aside for incrementing the accumulator 100 by the constant frequency reference time signal, minus 2 time cells set aside for centering determination, minus 1 time cell set aside for reset determination) during which a processed tachometer signal can be processed through the multiplexer 102 for the purpose of adjusting the accumulator value. The incrementing (reverse tape transport direction) or decrementing (forward tape transport direction) of the accumulator by capstan tachometer related signals, which is determined by the capstan direction signal placed on line 142 extending to the multiplexer 102, is synchronized to reference timing by virtue of the aforedescribed operation of the tachometer synchronizing circuit 164, however, the periodicity of the incrementing (or decrementing) is a function of the velocity of tape transport. Therefore, the incrementing (or decrementing) of the accumulator 100 by capstan tachometer related signals occurs during the 458 time cells, but during one or more of these time cells dependent upon the velocity of tape transport.

When the recording and reproducing apparatus is operating in the normal reproduce tape velocity mode, the reference timing signal increments the accumulator 64 times per field and the processed tachometer signal decrements the accumulator by a similar amount, thereby providing a net zero change in output provided by the accumulator 100, which corresponds to a zero movable head deflection signal, as is desired. If the tape is transported at a velocity faster than the normal reproduce tape velocity, it should be appreciated that the processed tachometer signal occurs at a greater rate than the reference rate of 64 pulses per revolution of the rotary head. Consequently, the accumulator 100 is decremented at a rate greater than the reference signal incrementing rate and the accumulator responsively generates an output of lines 110 that is gradually changed according to a movable head displacement signal of a ramp shape, similar to that shown in FIGS. 4(a) and 4(b), except both one and occasionally two track resets would be executed by the movable element. If the tape is transported at a speed less than the normal reproduce tape speed either in the forward or reverse tape transport directions, the processed tachometer signal occurs at a rate less than the reference rate of 64 pulses per revolution of the rotary head. During such operations, the accumulator 100 is decremented (when the tape is transported in the forward direction) or incremented (when transported in the reverse direction) at a rate less than reference signal incrementing rate. The accumulator 100 responsively generates an output on lines 110 during these operating modes that is gradually changed in the form of a ramp signal similar to those shown in FIGS. 4(a) and 4(b), except in the reverse tape transport direction the slope is the complement for the forward tape transport direction.

The processed capstan tachometer pulses not only effectively determine the slope of the ramp during the reproduction of special effect motion, but, together with the instantaneous position or elevation status information of the movable element provided to the reset PROM 104, determines the direction, magnitude and timing of any reset or repositioning movements that are required for the movable element for the various operating modes as determined by the 2-bit signal provided on lines 144 by the mode controller 180.

When a track of recorded information is repetitively reproduced, either occasionally or continuously, an undesirable visually perceivable disturbance is created upon the display of the reproduced video information, unless the time base correction system typically provided in operative association with the tape recording and reproducing apparatus is operated to retime the repetitively reproduced tracks of recorded information to eliminate such disturbance. However, during operating modes when a track of recorded information is repetitively reproduced only occasionally, for example, less than once every four revolutions of the rotary head (or fields), a visually perceptible disturbing vertical jitter remains in the reproduced and time base corrected video information. This disturbance is caused by a one horizontal line position vertical displacement that occurs upon the display of the repetitively reproduced track of recorded information as a result of the retiming of the video information by the time base correction system. Such vertical displacement disturbance can be avoided by resetting the movable element a distance corresponding to two tracks rather than one track whenever a track of recorded information is required to be repetitively reproduced. This is accomplished by placing switches 183 and 185 associated with the mode controller 180 of the automatic head position tracking servo system in the frame and normal positions, respectively, as described hereinbefore.

The switches 183 and 185 are operable to place the servo system in a frame stagger operating mode. This operating mode is particularly useful during reproduce operating modes wherein the tape transport velocity is very close to the the normal recording and reproducing tape transport velocity, such as for an asynchronous reproducing operation wherein the time of a recorded program is compressed or expanded to fit a desired time period. In such a reproduce operating mode, the tape is transported at a velocity that is slightly offset from the normal recording and reproducing tape transport velocity by an amount proportional to the time difference between the desired compressed (or expanded) program time and actual program time of the recorded program from which the compressed (or expanded) program is formed. For example, if a program length is compressed by one percent, the movable element must execute a single track jump approximately every one hundred revolutions of the rotary head, i.e., a recorded track is occasionally skipped during the reproduction operation. Positioning the switches 183 and 185 to cause the automatic head position tracking servo system to operate in the frame stagger mode as previously described causes the movable element to execute a two track, or full frame, jump, but does so by providing two consecutive field or one track jumps spaced in time by an interval corresponding one revolution of the rotary head or the reproduction of one television field. In other words, the movable element is reset to jump or skip a track, allowed to reproduce a track and then reset to jump or skip another track. When a single track jump is performed by the movable element, the relationship between the reference field sequence and the video field sequence of the reproduced video information changes in that the reproduced video field sequence is displaced from reference field sequence by an amount equal to one field. This requires a time base correction system to account for the difference and it does so by shifting the reproduced video information in time, which causes the introduction of the aforementioned undesirable one horizontal line position vertical displacement in the display of the reproduced video information. When this is done, the display of the reproduced video information will shift up or down a distance corresponding to one horizontal line position each time a one track jump is executed by the movable element. The shifting produces an undesirable visually perceptible vertical jitter disturbance in the displayed video information, the effects of which can be overcome by providing full frame or two track resets (or jumps). However, when a full frame jump occurs, there can be a visually perceptible jerkiness in the display of the reproduced video information, if video information content changes noticeably between the low track separated video fields.

These disturbing effects are minimized by providing head position tracking resets corresponding to two tracks, hence, two interlaced television fields in a particularly unique way to minimize significantly the objectionably disturbing visual effects upon display of the reproduced video information when the apparatus is operated to provide special motion effects. The two track reset is executed in the aforementioned staggered successive one field resets, as will be more fully described with respect to the detailed circuitry shown in FIGS. 10 through 12.

The five most significant bits of the accumulator output on lines 110 are applied to a digital-to-analog converter 114 as previously mentioned. The output of the digital-to-analog converter appears on line 190 and is applied to the control input of the multiplying digital-to-analog converter 112 for the purpose of adjusting the amplitude of the analog signal that is provided on line 92. When the recording and reproducing apparatus is operated over a wide range of tape transport velocities, large scale deflection of the movable element is often required. For accommodating a wide range of tape transport velocities, such as from 1X the normal record and reproduce speed in the reverse direction to about 3X the normal record and reproduce speed in the forward direction, the movable element will occasionally be required to execute two track resets, which represent a large range of deflection. The transfer function of movable elements, such as a piezo-ceramic element, is expressed as deflection as a function of voltage and is generally linear for a substantial part of its deflection range. However, when the piezo-ceramic movable element is deflected to approach either of its deflection range limits, its deflection or displacement as a function of voltage characteristic becomes nonlinear, as shown in FIG. 9. Thus, when the output signal of the accumulator 100 on lines 110 is indicative of a movable element deflection approaching either of its deflection range limits, the five most significant bits of this signal applied to the digital-to-analog converter 114 causes the following multiplying analog-to-digital converter 112 to alter the magnitude of the tracking error correction signal coupled to the movable element via line 92 to compensate for the nonlinearity in the transfer function of the movable element. The multiplying digital-to-analog converter 112 effects such correction through the well known square law rule that results by multiplying the magnitude of a signal by itself. Although this square law transfer function technique is an approximation approach to the non-linear compensation of movable element deflection versus voltage response, it is adequate for purposes of the present invention. The dotted representation in FIG. 9 illustrates the compensation that provides an approximate net linear transfer function throughout the dynamic range of the movable piezo-ceramic element.

Attention is now directed to FIG. 1(b), which illustrates a functional block diagram of a capstan servo system 300 operatively associated with the automatic head position tracking servo system functionally illustrated in FIG. 1(a), which together enable the movable element to be deflected while the transport tape of the tape is is caused to execute a velocity change with the movable element controlled to cause the supported head to scan and reproduce each recorded track once without resets of the movable element, hence, without objectionable timing error nor the introduction of disturbances in the displayed reproduced video information. This occurs when the mode PROM 201 (FIGS. 10(a) and 10(b)) receives a control track lock state signal on its input line 203, an AST normal state signal on its input line 199 and a capstan lock state signal on its input line 205. The combination of these input signals causes the mode PROM 201 to issue a 2-bit mode control signal that conditions the reset PROM 104 so that it provides reset determination signals to the accumulator 100 (FIGS. 1(a)) according to the normal reproduce tape velocity operating mode (FIG. 5), as will be described in further detail hereinafter. As a result of this conditioning of the reset PROM 104, the velocity change is executed and the movable element is deflected so that the supported head follows each recorded track one time during the velocity change interval without being reset by the movable element. It will be appreciated that this occurs even though the tape is transported through a range of velocities while the head is rotated to scan one or more tracks during the velocity change interval, which range of velocities could include a movable element displacement and tape velocity condition that produce a reset condition, but for the automatic head position tracking servo system being placed in the normal reproduce tape velocity operating mode represented by FIG. 5. The displacement of the head carried by the movable element is illustrated in FIG. 4(c).

The preferred embodiment of the automatic head position tracking servo system is arranged to execute such a velocity change operation from a control track locked stop operating condition, wherein the tape is transported from a zero tape velocity, to the normal record and/or reproduce tape transport velocity. The control of the tape transport in these tape velocity operating contitions is exercised by the capstan servo system illustrated in FIG. 1(b). The capstan servo system includes a control track error detector 343 that generates a control track related error signal in the form of a tape speed related voltage level that controls a following control track voltage controlled oscillator 345, which provides an output signal at a frequency that determines the speed of the capstan motor. This output signal is coupled to one input of a capstan tachometer error detector 347 and serves as a reference signal for comparison to the capstan tachometer signal. This error detector 347 provides a capstan servo error signal that is coupled to the capstan motor drive amplifier circuit 349 that responsively controls the drive provided to the capstan motor (not shown) to maintain the transport of the tape at the desired speed.

The control track related error signal is generated by sampling a ramp output of a linear ramp generator, with the sample being taken and held at a particular time, such as at the time of a control track transition. The ramp is reset by a delayed reference vertical sync signal. Samples are taken at the occurrences of control track transitions, which nominally occur at the midpoints of the occurrences of the voltage ramp signals when the tape is transported at the correct normal playback speed. Variations in the occurrences of the control track transitions relative to the generation of the ramp signal result in the ramp signal being sampled at points along the slope of the ramp signal which are either higher (tape speed too slow) or lower (faster tape speed too fast) than the midpoint of the ramp signal.

If a control track signal is generated using a synthetic control track signal generated from vertical sync pulses extracted from the reproduced video information signal reproduced by the rotating video playback head, the slope of the ramp must be increased because the head rotates, hence, scans along the tape much faster than the longitudinal speed of the tape past the control track playback head. In an interval corresponding to about the duration of 2-1/2 horizontal lines, or about .01 of the duration of a video field, the video head passes a longitudinal length of tape which corresponds to the distance the tape moves relative to the conventional stationary control track playback head during the reproduction of one video field. Thus, to compensate for the loss in sensitivity produced by the 100 times increase in the head to tape speed of the video head relative to the head to tape speed of the control track playback head, the slope of the ramp must be increased by the same factor to obtain the same resulting sensitivity.

When the synthetic control track signal is used to control the capstan servo, the slope of the ramp is sharply increased. The slope is increased by an operator initiated synthetic control track command provided over line 338 to the control track error detector 343, which effectively removes a large capacitor from the ramp generating circuit included in the control track error detector. The ramp is reset in response to the aforementioned delayed reference vertical sync. The delayed reference vertical sync is generated with an amount of delay which is changed depending upon whether regular or synthetic control track signals are used in the control track error detector 343. The delayed vertical sync is normally delayed by an interval corresponding approximately to the time of a full video field and in the synthetic control track mode, it is delayed by a slightly lesser amount to form an advanced reference vertical signal. The ramp is therefore reset slightly earlier by the advanced reference vertical signal than it would otherwise be reset.

An important consideration is that the timing of the ramp signal sampling in the control track error detector 343 is controlled so that the desired nominal zero tape speed error voltage level is identical whether the apparatus is using actual or synthetic control track signals. The selection of the actual or synthetic control track signals and the normal or advanced reference vertical signals is made by a switching device 311 that is responsive to the aforementioned synthetic control track command. Normally, the switching device provides the actual control track and normal vertical reference signals to the capstan servo system 300. Upon receipt of the synthetic control track command, the synthetic control track and advanced vertical reference signal are coupled by the switching device 311 to the capstan servo system 300.

The synthetic control track signal is generated from recorded video information signals, which is applied to the capstan servo otherwise operated in a conventional manner. The synthetic control track is generated from the field one identification signal provided by a common color framer circuit included in video tape recording and/or reproducing apparatus. The field one identification signal, together with playback vertical sync are used to generate the synthetic control track signal. It should be appreciated that the relationship of the conventionally recorded control track signal to vertical sync is such that each field rate transition of the control track signal is recorded on the tape approximately half way between the occurrences of successively reproduced vertical sync signals. The transitions of the synthetic control track is essentially coincident with vertical sync, which means that they are offset relative to the occurrences of the conventionally recorded control track transitions, but the offset is compensated for in the capstan servo system..

More particularly, it should be appreciated that the control track signals are recorded and reproduced by a fixed head and that the control track transitions are reproduced in response to the tape being moved relative to the control track head. It should also be appreciated that when the speed of the tape is relatively slow or stopped, the head continues to scan the recorded video tracks during reproducing operations after the transport of the tape is stopped. As will become apparent from the further description of the capstan servo system 300, this permits the execution of a tape transport velocity change from a stop condition to the normal record and reproduce velocity under fully synchronous conditions.

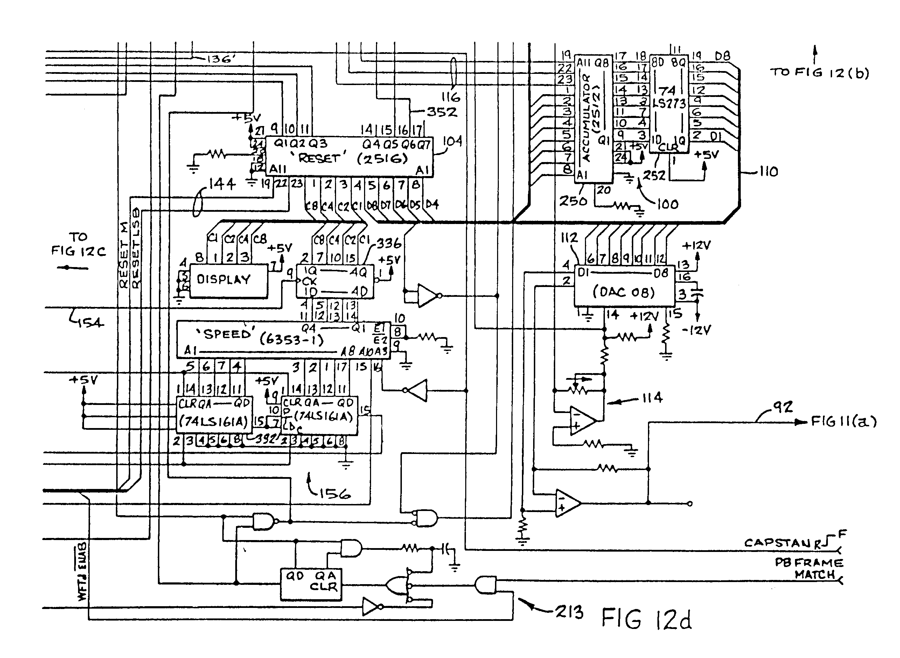

Referring to FIG. 3, the RF envelope in the area of the drop out is illustrated in conjunction with a typical reset operation that may occur.If the reset is a two track transverse reset, the response time of the reset movement may be such that it must begin the resetting movement prior to the end of the active video portion of the field, in which case the RF signal may be truncated as illustrated at 350. If this occurs, then the reproduced video information signal may be quite noisy. Under certain conditions, the last several lines in the field may have almost no RF at all. To prevent the last few lines of the picture from being displayed, circuitry shown in FIGS. 12(b) and 12(d) operates to provide an active drop-out compensation signal that can be applied to a time base correcting means that is generally always used with a video tape recording and reproducing machine during color reproducing.This drop-out compensation signal causes the time base corrector to repeat the last several lines from a preceding field so that the noisy RF signal will not be viewed.

To accomplish the generation of the signal, the reset PROM 104 has an output line 352 that is applied to the D input of a flip-flop 354 which is clocked by the signal on line 136 which produces a high output on output line 356 when a high signal on line 352 is present during clocking of the flip-flop 354.The reset PROM output signal 352 is high when the reset PROM 104 determines that a reset is to occur as a function of the reproducing speed of the machine and of the elevation of the head as previously described.

From the foregoing detailed description, it should be appreciated that an improved automatic head position tracking servo system has been shown and described which has many desirable attributes in terms of performance and expanded functional capability. The system operates to provide very accurate tracking during reproducing and effectively positions the head to begin following the next track that is to be reproduced in a manner whereby the transducing head is maintained in a generally centered position relative to its dynamic range. This results in efficiency of operation and superior resulting reproduced video information under various special motion effect reproducing modes. The system is extremely powerful and fast acting in terms of its functional capabilities compared to many prior art automatic head position tracking systems.

## Claims

1. A helical wrap magnetic video tape recording and reproducing machine, comprising transducing means operatively supported by rotation means for scanning a magnetic tape along a plurality of adjacent discrete tracks oriented at an angle relative to the lengthwise direction of the tape, wherein each track contains a field of video information, the rotation means including means for moving said transducing means generally transversely relative to the longitudinal direction of said tracks in response to signals being applied thereto, servo control means (84,88) for controlling the transverse position of the transducing means to cause the transducing means to follow a track during reproducing and to selectively reposition the transducing means to begin following a next desired track to be reproduced when the machine is operating in a reproducing mode wherein transverse repositioning of the transducing means is selectively required, and a dynamic error-correction means (62,65) which applies a correction signal to the servo control means to compensate for high frequency repetitive errors that are present during the following of tracks, the dynamic error-correction means being arranged to sample the dynamic error at a predetermined number of sample locations during the following of each track and to store continually updated average values of the samples taken at each sample location over a series of tracks, characterised by means (235) for inhibiting the updating of the said average value for each sample location at a preselected reproducing speed at which transverse repositioning of the transducing means occurs for alternate tracks.

2. A machine according to claim 1 and comprising a plurality of capacitors (216) for storing the sample values and wherein the means for selectively inhibiting includes means (228,224) for preventing the application of new sample values to the capacitors.

3. A machine according to claim 2 wherein the dynamic correction means includes a switch (62) which is operable to apply the value of a tracking error signal present on an input line to any one of the plurality of capacitors that is conditioned to accept the value, said means for inhibiting (235) providing a signal for opening the switch (62) to prevent the application of the value of the tracking error signal to any of the capacitors.

4. A machine according to any foregoing claim wherein the preselected speed is half a normal speed of reproduction.

## Patentansprüche

1. Video-Bandaufzeichnungs- und Wiedergabegerät mit schraubenförmiger Bandführung, mit einer durch eine Rotationseinrichtung betrieblich gelagerten Wandleranordnung zur Abtastung eines Magnetbandes längs einer Vielzahl von unter einem Winkel zur Bandlängsrichtung orientierten, benachbarten diskreten Spuren, wobei die Spuren jeweils ein Videoinformationsteilbild enthalten und die Rotationseinrichtung eine Vorrichtung zur Bewegung der Wandleranordnung generell quer zur Spurlängsrichtung als Funktion von in sie eingespeisten Signalen enthält, einer Servoregelanordnung (84, 88) zur Regelung der Querstellung der Wandleranordnung, um diese bei Wiedergabe einer Spur folgen zu Lassen und sie für den Beginn des Folgens einer nächsten gewünschten abzuspielenden Spur selektiv neu einzustellen, wenn im Wiedergabebetrieb des Gerätes eine Querneueinstellung der Wandleranordnung selektiv erforderlich ist, und mit einer dynamischen Fehlerkorrekturanordnung (62, 65), die zur Kompensation von während des Folgens von Spuren vorhandenen sich wiederholenden Hochfrequenzfehlern ein Korrektursignal in die Servoregelanordnung einspeist, den dynamischen Fehler während des Folgens der Spuren an einer vorgegebenen Anzahl von Abtaststellen abtastet und kontinuierlich aktualisierte Mittelwerte der jeweiligen an den Abtaststellen gewonnenen Abtastwerte über eine Folge von Spuren speichert, **gekennzeichnet durch** eine Anordnung (235) zur Sperrung der Aktualisierung des jeweiligen Mittelwertes der Abtaststellen bei einer ausgewählten Wiedergabegeschwindigkeit, bei der die Querneueinstellung der Wandleranordnung für abwechselnde Spuren auftritt.

2. Gerät nach Anspruch 1 mit mehreren Kondensatoren (216) zur Speicherung der Abtastwerte, bei dem die Sperranordnung Mittel (228, 224) zur Unterbindung des Einspeisens neuer Abtastwerte in die Kondensatoren enthält.

3. Gerät nach Anspruch 2, bei dem die dynamische Korrekturanordnung einen Schalter (62) zur Einspeisung des Wertes eines Spurfolge-Fehlersignals auf einer Eingangsleitung in die Kondensatoren enthält, welche zur Aufnahme des Wertes konditioniert sind, und die Sperranordnung (235) ein Signal zur Öffnung des Schalters (62) zwecks Verhinderung der Ein-speisung des Wertes des Spurfolge-Fehlersignals in die Kondensatoren liefert.

4. Gerät nach den vorhergehenden Ansprüchen, bei dem die ausgewählte Geschwindigkeit gleich der halben Normalwiedergabegeschwindigkeit ist.

## Revendications

1. Dispositif d'enregistrement et de reproduction de bande vidéo magnétique à enroulement hélicoïdal comprenant un moyen de transduction supporté de manière fonctionnelle par un moyen en rotation pour lire une bande magnétique le long d'une pluralité de pistes discrètes adjacentes orientées selon un certain angle par rapport à la direction longitudinale de la bande, dans lequel chaque piste contient une trame d'information vidéo, le moyen en rotation comprenant un moyen pour déplacer ledit moyen de transduction globalement transversalement par rapport à la direction longitudinale desdites pistes en réponse aux signaux qui lui sont appliqués, un moyen de servocommande (84, 88) pour commander la position transversale du moyen de transduction pour faire en sorte que le moyen de transduction suive une piste pendant la transduction et pour repositionner de manière sélective le moyen de transduction pour commencer à suivre une piste suivante souhaitée à reproduire lorsque le dispositif est mis en oeuvre dans un mode de reproduction dans lequel le repositionnement transversal du moyen de transduction est requis de manière sélective, et un moyen dynamique de correction d'erreurs (62, 65) qui applique un signal de correction d'erreur au moyen de servocommande pour compenser des erreurs répétitives à haute fréquence qui sont présentes pendant le suivi de pistes, le moyen dynamique de correction d'erreurs étant agencé pour échantillonner l'erreur dynamique au droit d'un certain nombre prédéterminé d'emplacements d'échantillonnage pendant le suivi de chaque piste et pour mémoriser de manière continuelle des valeurs moyennes mises à jour des échantillons pris à chaque emplacement d'échantillonnage sur une série de pistes, caractérisé par un moyen (235) d'interdiction de la mise à jour de ladite valeur moyenne pour chaque emplacement d'échantillonnage à une vitesse de reproduction présélectionnée à laquelle le repositionnement transversal du moyen de transduction se produit pour des pistes alternées.

2. Dispositif selon la revendication 1 et comprenant une pluralité de condensateurs (216) pour mémoriser les valeurs d'échantillon et dans lequel le moyen d'interdiction sélective comprend un moyen (228, 224) pour empêcher l'application de nouvelles valeurs d'échantillon aux condensateurs.

3. Dispositif selon la revendication 2, dans lequel le moyen de correction dynamique comprend un commutateur (62) qui est manoeuvrable pour appliquer la valeur d'un signal d'erreur de centrage, présent sur une ligne d'entrée, à l'un quelconque d'une pluralité de condensateurs qui est conditionné pour accepter la valeur, ledit moyen d'interdiction (235) délivrant un signal pour ouvrir le commutateur (62) pour empêcher l'application de la valeur du signal d'erreur de centrage à l'un quelconque des condensateurs.

4. Dispositif selon l'une quelconque des revendications précédentes, dans lequel la vitesse présélectionnée est la moitié d'une vitesse de reproduction normale.
